# FASCICULE DE BREVET EUROPEEN

(11) **EP 3 393 985 B1**
(45) Date de publication et mention de la délivrance du brevet: **25.09.2019**
(21) Numéro de dépôt: 16823252.8
(22) Date de dépôt: 19.12.2016
(51) Int. Cl.: C02F 11/12, C05F 3/06, C02F 1/44, C02F 103/20

(54) **DISPOSITIF ET PROCÉDÉ DE TRAITEMENT D'UNE BIOMASSE POUR PRODUIRE DES MATIÈRES SÈCHES SOLIDES, UN ENGRAIS PHOSPHORÉ ET AZOTÉ, UN ENGRAIS AZOTÉ RICHE EN POTASSIUM ET DE L'EAU**
VORRICHTUNG UND VERFAHREN ZUR BIOMASSEBEHANDLUNG FÜR DIE HERSTELLUNG VON FESTER TROCKENMASSE, PHOSPHOR- UND STICKSTOFFDÜNGEMITTEL, KALIUMREICHES STICKSTOFFDÜNGEMITTEL UND WASSER
DEVICE AND METHOD FOR BIOMASS TREATMENT FOR THE PRODUCTION OF SOLID DRY MATTER, A PHOSPHORUS AND NITROGEN FERTILIZER, A POTASSIUM-RICH NITROGEN FERTILIZER AND WATER

(30) Priorité: 23.12.2015 LU 92928
(43) Date de publication de la demande: 31.10.2018
(73) Titulaire: AMA Mundu Technologies S.A., 3895 Foetz (LU)
(72) Inventeur: TROUVE, Emmanuel, 34270 Vacquieres (FR)
(74) Mandataire: Dennemeyer & Associates S.A.
(86) Numéro de dépôt international: PCT/EP2016/081763
(87) Numéro de publication internationale: WO 2017/108701

(56) Documents cités:
- EP-A1- 1 757 562
- US-A1- 2014 377 829

## Description

La présente invention concerne un dispositif, selon la revendication 1, et un procédé, selon la revendication 6, de traitement d'une biomasse (1) pour produire des matières sèches solides (31), un engrais phosphoré et azoté (51A;51B), un engrais azoté (71) riche en potassium et de l'eau potable (72).

Dans le domaine de l'énergie, et plus particulièrement des bioénergies, le terme de biomasse désigne l'ensemble des matières organiques d'origine végétale (algues incluses), animale ou fongique (champignons) pouvant devenir source d'énergie par combustion (ex : bois énergie), après méthanisation (biogaz) ou après de nouvelles transformations chimiques (agrocarburant).
La biomasse est aujourd'hui la deuxième source d'énergie renouvelable en France, après l'énergie hydraulique. Dans la présente invention le terme biomasse doit être compris comme englobant la biomasse solide et liquide.
Exemple de biomasse solide : fumier, boues de stations d'épuration, boues de digesteurs. Exemple de biomasse liquide : lisier, purin.

La modernisation et la spécialisation des activités agricoles a conduit à abandonner l'équilibre entre l'alimentation des animaux par les seuls produits de la ferme d'une part et le retour des déjections animales sur les terres de la ferme d'autre part. Désormais, de nombreux élevages importent une part importante de l'alimentation animale (jusqu'à 100%) et ne disposent plus de suffisamment de terres pour y retourner les lisiers ou autres déjections produites. Dans l'Union Européenne, l'impact environnemental de ces élevages hors sol (ou utilisant peu de terres agricoles) est avéré : pollution importante des ressources en eau douce, en particulier par les nitrates ou par les résidus de substances vétérinaires, et également par les excès de potassium.
Le Luxembourg possède environ 680 élevages d'animaux de plus de 100 têtes équipés de fosses à lisier, et les pays voisins (DE, BE, NL et FR) en possèdent plus de 153000. Il reste aussi un grand nombre d'élevages sans fosse à lisier. (Source: Eurostat, Survey on agricultural production methods and Farm structure survey, 2010).

Issu des déjections animales, le lisier est un mélange complexe et de compositions très variables, en fonction des animaux présents sur l'exploitation agricole, de leur mode d'alimentation et d'élevage et du mode de collecte des déjections animales.

Bien que produit toute l'année, le lisier ou les mélanges en contenant ne peuvent être épandus sur les terres agricoles en toute saison : il existe des périodes de restriction ou d'interdiction d'épandage. De même, les quantités autorisées par hectare de terre sont aussi réglementées. Les élevages sont ainsi contraints de stocker les lisiers pendant des périodes de plusieurs mois, supportant le coût d'investissement de ces cuves de stockage. Puis la vidange des cuves est réalisée durant les périodes autorisées, sans toutefois correspondre aux seuls besoins des cultures en fertilisants : n'étant pas utilisés par les plantes, les apports excédentaires migrent vers les nappes d'eau souterraines et les polluent de manière importante; dans le cas de nappes fluviales, les polluants rejoignent la mer et provoquent aussi la prolifération d'algues. La dépollution des lisiers pour éviter leur épandage est pratiquée dans certaines régions européennes par des procédés conventionnels de traitement des eaux usées : l'énergie requise est importante, et la réglementation évolue vers une interdiction de ces méthodes. Une autre alternative est l'apport des lisiers ou mélanges en contenant comme substrat pour la production de biogaz : non seulement le potentiel méthanogène n'est que modéré ou faible, mais le transport d'une grande proportion d'eau (50% à 90%) à un coût et un impact environnemental difficilement soutenable pour les opérateurs.
Dans tous les cas, le problème principal est le transport d'une grande proportion d'eau sans intérêt pour la destination finale (fertilisation par épandage, méthanisation). Dans le cas de l'épandage, de nombreux captages d'eau souffrent d'un excès de potassium (K) et de nitrates (NO₃) suite aux apports trop importants de lisiers. Un second problème en découle : l'absence de méthode de concentration compatible avec les contraintes économiques et techniques des exploitations agricoles européennes, malgré toutes les tentatives réalisées depuis l'émergence du problème avec toutes les technologies conventionnelles de concentration.

A ce jour il n'existe aucun procédé ni système équivalent à la présente invention. Les alternatives actuelles souffrent soit d'un problème de coût élevé, soit de contraintes économiques (ex: coûts en hausse pour l'épandage, ...), soit de contraintes environnementales (ex: interdiction d'épandage ou de rejet, ...).
Les solutions existantes se répartissent en deux grandes familles :
1. Procédés physico-chimiques :
   La séparation mécanique, l'isolation sous lattes, la décantation, naturelle ou par centrifugation, flottation avec air dissous, précipitation physico-chimique.
2. Procédés biologiques :
   Procédés de digestion anaérobie, boues activées, bio-filtration, compostage.

Basées sur une approche de type 'traitement' avec valorisation partielle de certains sous-produits, ces solutions ne permettent pas un fractionnement complet des lisiers donnant exclusivement des produits valorisés (eau, engrais NP (azote-phosphore) ou NK (azote-potassium), matières organiques sèches). De plus, elles génèrent des transports importants entre fosses et lieux de traitement ou d'épandage, et elles ne suppriment pas les risques de nuisances olfactives et de pollution des aquifères, des rivières ou des eaux côtières.

Le point scientifique et technique le plus complet a été réalisé lors d'une conférence tenue en Belgique en 2013, avec la participation des meilleurs spécialistes mondiaux: http://www.manuresource2013.org

L'avantage que procure la présente invention est qu'elle permet de fractionner les lisiers sans les transporter et d'obtenir ainsi trois ou quatre fractions valorisables:
(1) une eau sans micropolluants, une eau avec une teneur résiduelle en azote très faible ou nulle, dont l'infiltration ou l'irrigation peuvent être menées sans risque pour les aquifères, ladite eau pouvant aussi être utilisée en boisson animale ou en nettoyage,
(2,3) un engrais riche en phosphore & azote et un engrais liquide riche en potassium & azote, conservable jusqu'à son utilisation en phase avec les besoins, et
(4) un mélange de matières concentrées dans un faible volume, pouvant satisfaire à plusieurs utilisations telles que paillage, substrat de méthanisation, amendement organique simple ou composté, combustible. Conçu à partir de techniques de séparation mécaniques, physiques et hydrauliques, ladite technique n'utilise pas de produits chimiques rejetés avec l'eau : c'est une solution propre.
La présente invention procure les mêmes avantages lorsqu'elle est mise en oeuvre pour fractionner des digestats, des mouts de fermentation, des boues de station d'épuration.

Les extracteurs d'eau de la présente invention utilisent la séparation sur membranes céramiques de nanofiltration: la taille des pores est si petite (0,1 nm à 5 nm) que seule l'eau (et quelques ions ou petites molécules) peuvent traverser cette barrière membranaire. Selon les liquides bruts, des prétraitements appropriés sont sélectionnés et appliqués en temps réel pour bien préparer le passage en nanofiltration.
Selon la qualité d'eau souhaitée, une étape de finition est identifiée pour atteindre les exigences de rejet ou de réutilisation de l'eau.
L'extraction d'engrais permet la récupération du phosphore et du potassium dans deux fractions séparées, avantageuses pour la formulation et l'utilisation desdits engrais.

D'autres avantages de la présente invention portent sur la diafiltration sur membranes de nanofiltration, le fractionnement complet in situ, l'extraction à bas coût du phosphore organique et l'extraction séparée du potassium et du phosphore. La diafiltration est un processus de dilution qui implique l'élimination ou la séparation de certains composants d'un liquide contenant des molécules solubles et dans certaines conditions filtrables dans une solution (aqueuse en général), basée sur le tri des molécules selon leur taille en utilisant des filtres perméables plus ou moins nanométriques, avec l'objectif de produire de l'eau pure ou de récupérer des éléments.
Une action est exercée sur le volume pour diminuer la concentration avant le passage à travers le module (6) de nanofiltration et simultanément le PH est influencé en amont du module (6) de nanofiltration afin d'optimiser la filtration.

### Approche problème-solution :

EP 1757562 correspond à l'état de la technique le plus proche car il concerne un dispositif et un procédé de traitement de lisier.

Les trois différences entre le document de l'état de la technique le plus proche EP 1757562 et la présente invention sont:
1) module (2) d'analyses de PH et de siccité étant placé en amont d'un répartiteur (222) ;
2) un répartiteur (222) est relié à un module (2) d'analyses de PH et de siccité mesurant les caractéristiques de siccité et de PH de la biomasse (1) ;
3) au-moins un premier conduit de couplage (32) relie le tamis (4) au module (3) de séparation de la biomasse et au-moins un second conduit de couplage (30) relie le module (3) de séparation de la biomasse au tamis (4).

L'effet technique du module (2) d'analyses de PH et de siccité est d'améliorer le rendement des produits finaux (cf tableau 2).
L'effet technique du répartiteur est d'étendre l'acceptation de lisiers en entrée à toute gamme de siccité .
L'effet technique des conduits de couplage en boucle est de supprimer le rejet de deux fractions difficilement valorisable.

Le problème technique objectif résolu par la présente invention peut être considéré comme comment adapter le dispositif pour le rendre capable d'accepter des lisiers à toute gamme de siccité afin d'obtenir de meilleur rendements (cf tableau 2).

La solution proposée par la présente invention implique une activité inventive car US 2014/0377829 mentionne à la page 2 paragraphe 27 que « le dispositif 300 peut en outre comprendre un capteur de pH 301 pour mesurer la valeur du pH du liquide par exemple dans le conteneur 102 de déchets ... ». Aucune figure du document US 2014/0377829 ne montre un capteur de pH en amont du séparateur (104) mais uniquement en aval du séparateur (104), cf figure 3A, 3B', 3B" et 3C, alors que la présente invention montre un module (2) d'analyses de PH et de siccité placé en amont du répartiteur (222).
Un avantage du positionnement module (2) d'analyses de PH et de siccité en amont du répartiteur (222) est de permettre d'orienter le flux de matière entrante vers l'un des deux dispositifs de séparation liquide/solide couplés afin d'obtenir des rendements de séparation supérieurs à ceux des appareils utilisés sans couplage :
Pour les fortes siccités (> 5%), les matières entrantes dans le répartiteur (222) sont dirigées en premier vers le séparateur (3), puis la phase liquide est ramenée par le conduit (30) au tamis (4) afin de récolter des matières particulaires plus fines : le rendement de récupération de matière solide est ainsi supérieur à celui d'un séparateur seul.
Pour les faibles siccités (< 5%), les matières entrantes dans le répartiteur (222) sont dirigées en premier vers le tamis (4), puis la phase solide est ramenée par le canal (32) vers le séparateur (3) afin de recueillir une fraction de liquide non obtenue à pression atmosphérique sur le tamis : le rendement de récupération de la phase liquide est supérieur à celui d'un tamis seul.
Un autre avantage du positionnement du module (2) d'analyses de PH et de siccité en amont du répartiteur (222) est de permettre de réaliser, dès la sortie du répartiteur (222) et avant le tamis (4) ou le séparateur (3), une correction du pH selon la valeur initiale constatée, ladite correction de pH étant coordonnée avec la mesure de siccité afin d'obtenir une répartition nouvelle des éléments fertilisants et des flux supérieurs dans les dispositifs d'extraction d'eau en aval.
Pour les fortes siccités (> 5%), les matières entrantes ayant été dirigées en premier vers le séparateur (3) font l'objet d'une correction de pH afin de provoquer avant séparation un changement de structure des matières colloïdales (taille : 0,001 à 1 µm): le partage du phosphore entre phase solide et phase liquide peut ainsi être orienté avantageusement selon les besoins de ces formes respectives de fertilisants, ce qui est impossible en ne prenant en compte le pH qu'en aval du séparateur.
Pour les faibles siccités (< 5%), les matières entrantes ayant été dirigées en premier vers le tamis (4) font l'objet d'une correction de pH afin de provoquer avant tamisage un changement de solubilité d'éléments fertilisants d'intérêt : en particulier le partage de l'azote N et du potassium K entre phase solide et phase liquide peut ainsi être orienté avantageusement selon les besoins de ces formes respectives de fertilisants, ce qui est impossible en ne prenant en compte le pH qu'en aval du séparateur.
Ne disposant pas du couplage entre tamis et séparateur avec répartiteur, l'homme du métier n'aurait pas pu observer les phénomènes ni obtenir les avantages décrits ci-dessus.
L'homme du métier optimise une seule opération unitaire à la fois

Le problème technique résolu par la présente invention est aussi de fournir une solution écologique à l'importante pollution des nappes phréatiques et de la mer ayant comme origine la biomasse solide telle que les fumiers, boues de stations d'épuration, boues de digesteurs et la biomasse liquide telle que le lisier et le purin.
La solution à ce problème est de traiter la biomasse (1) en la faisant passer dans un dispositif afin de produire des matières sèches solides (31), un engrais phosphoré et azoté solides (51B) et/ou solide en suspension liquide (51A), un engrais azoté (71) liquide riche en potassium et de l'eau potable (72).

La présente invention concerne un dispositif de traitement d'une biomasse (1) pour produire des matières sèches solides (31), un engrais phosphoré et azoté (51A;51B), un engrais azoté (71) riche en potassium et de l'eau potable (72) comprenant :
- de la biomasse (1) se présentant sous forme d'une partie dite liquide (L) et d'une partie dite solide (S), introduites par au-moins un conduit (21A) directement relié à au-moins un module (2) d'analyses de PH et de siccité qui mesure les caractéristiques de siccité et de PH de ladite biomasse (1), ledit module (2) d'analyses de PH et de siccité étant placé en amont d'un répartiteur (222),
- au-moins un répartiteur (222) directement relié d'une part par le conduit (22) à au-moins un module (3) de séparation des parties liquides (L) et solides (S) de la biomasse (1) et d'autre part à au-moins un tamis (4) par le conduit (21B), ledit répartiteur (222) recevant ladite biomasse (1) et envoyant cette biomasse (1) vers ledit module (3) de séparation des parties liquides (L) et solides (S) de la biomasse (1) si la siccité est supérieure à 1%,2%,3%,4%,5%,6%,7%,8%,9%, 10%,11%,12%,13%,14%,15%,16%,17%,18%,19%,20%, de préférence 15% et envoyant la biomasse (1) vers ledit un tamis (4) si la siccité est inférieure ou égale à 1%,2%,3%,4%,5%,6%,7%,8%,9%,10%,11%,12%,13%,14%,15%,16%,17%,18%,19 %,20%, de préférence 15%,
- ledit tamis (4) dans lequel entre ladite biomasse (1) de siccité inférieure ou égale à 15%, ledit tamis (4) comportant :
   - au-moins un conduit (21B) d'entrée de la biomasse (1) de siccité inférieure ou égale à 1%,2%,3%,4%,5%,6%,7%,8%,9%,10%,11%,12%,13%,14%,15%, 16%,17%,18%,19%,20%, de préférence 15%, ledit conduit (21B) étant directement relié audit répartiteur (222),
   - au-moins un conduit (30) d'entrée de la partie liquide (L) extraite de la biomasse (1) de siccité supérieure à 1%,2%,3%,4%,5%,6%,7%,8%,9%,10%, 11%,12%,13%,14%,15%,16%,17%,18%,19%,20%, de préférence 15%, directement relié à au-moins un module (3) de séparation des parties liquides (L) et solides (S) de la biomasse (1),
   - au-moins un conduit (41) de sortie de la partie liquide (L) de la biomasse (1) directement relié à au-moins un module (6) de nanofiltration,
- ledit au-moins un module (3) de séparation de la biomasse (1) de siccité supérieure à 1%,2%,3%,4%,5%,6%,7%,8%,9%,10%,11%,12%,13%,14%,15%, 16%,17%,18%,19%,20%, de préférence 15% comportant :
   - au moins un conduit (22) d'entrée de la biomasse (1) de siccité supérieure à 1%,2%,3%,4%,5%,6%,7%,8%,9%,10%,11%,12%,13%,14%,15%,16%,17%,1 8%,19%,20%, de préférence 15%, ledit conduit (22) étant directement relié à audit répartiteur (222),
   - au-moins un convoyeur (33) de sortie de matières sèches solides (31),
- au-moins un premier conduit (32) de transfert transportant un reliquat de la partie solide (S) de la biomasse (1) retenue sur le tamis (4), dudit tamis (4) vers ledit module (3) de séparation de la biomasse et,
- au-moins un second conduit (30) de transfert transportant la partie liquide (L) de la biomasse (1) dudit module (3) de séparation de la biomasse vers ledit tamis (4),
- ledit premier conduit (32) de transfert et ledit second conduit de transfert (30) constituant une boucle de couplage entre ledit tamis (4) et ledit module (3) de séparation de la biomasse,
- ledit au-moins un module (6) de nanofiltration comportant :
   - au-moins un conduit (61A) de transfert de produits liquides phosphorés et azotés directement relié à un module (5) d'extraction de produits phosphorés et azotés sous forme solide (51B), évacuant les produits phosphorés et azotés sous forme solide (51B) par au-moins un conduit de récupération (61B),
   - au-moins un conduit de transit (61C) de sortie de produits phosphorés et azotés sous forme liquide et solide (51A), ledit conduit de transit (61C) étant en amont du module (5) d'extraction de produits phosphorés et azotés,
   - au-moins un conduit (62) de transfert de produits liquides riches en potassium, en azote et en eau potable directement relié à au moins un module d'osmose inverse (7),
- ledit au-moins un module d'osmose inverse (7) comportant :
   - au-moins un conduit (73A) de sortie d'engrais azoté (71) riche en potassium,
   - au-moins un conduit (74) de sortie d'eau potable (72).

De préférence, ledit dispositif comprend au-moins une première pompe (9B) de régulation du PH de la biomasse (1) directement reliée par au-moins un conduit (111) au conduit (21A) lui-même relié à la biomasse (1).
De préférence, ledit dispositif comprend au-moins un module (8) de réserve de diafiltration comportant :
- au-moins un conduit de sortie (91) directement relié audit conduit (41) relié au module (6) et
- au-moins un conduit d'entrée (75) directement relié audit module d'osmose inverse (7) et
- au-moins un conduit d'entrée (101) directement relié à au-moins une deuxième pompe (9A) de régulation du PH.
De préférence, ledit dispositif comprend un module (5) d'extraction de produits phosphorés et azotés sous forme solide (51B) comportant au-moins un conduit de transfert primaire (52B) relié directement audit conduit (21A) recevant la biomasse (1), pour ensemencer ledit conduit (21A) en amont dudit répartiteur (222) et comportant aussi au-moins un conduit de transfert secondaire (52A) relié directement au tamis (4), transportant lesdits produits phosphorés et azotés sous forme liquide et solide (51A) vers ledit tamis (4), pour ensemencer ledit tamis (4).
De préférence, ledit dispositif comprend un module d'osmose inverse (7) évacuant un engrais azoté (71) riche en potassium par au-moins une canalisation (73A) de sortie d'engrais azoté (71) riche en potassium, laquelle est connectée à au-moins une canalisation (73B) de retour en tête reliée directement audit conduit (21A) recevant la biomasse (1), afin d'augmenter la concentration en engrais azoté (71) riche en potassium.
De préférence, ledit dispositif de la présente invention peut être transporté sur tout véhicule terrestre (par exemple sur la remorque d'un camion).

La présente invention concerne aussi un procédé de traitement d'une biomasse (1) pour produire des matières sèches solides (31), un engrais phosphoré et azoté (51A ;51B), un engrais azoté (71) riche en potassium et de l'eau potable (72) comprenant les étapes suivantes:
a) traiter une biomasse (1) ayant un PH acide, se présentant sous forme d'une partie liquide (L) et d'une partie solide (S), par au-moins une pompe (9B;9A) de régulation de PH,
b) analyser le PH et la siccité de la biomasse (1) par un module (2) d'analyses de PH et de siccité, placé en amont d'un répartiteur (222),
c) répartir par au-moins un répartiteur (222) la biomasse (1) de siccité inférieure ou égale à 1%,2%,3%,4%,5%,6%,7%,8%,9%,10%,11%,12%,13%,14%,15%,16%,17%,18%,19%, 20%, de préférence 15% vers au-moins un tamis (4) et la biomasse (1) de siccité supérieure à 1%,2%,3%,4%,5%,6%,7%,8%,9%,10%,11%,12%,13%,14%,15%,16%, 17%,18%,19%,20%, de préférence 15% vers au-moins un module (3) de séparation de la biomasse (1),
d) séparer la biomasse (1) de siccité supérieure à 1%,2%,3%,4%,5%,6%,7%,8%, 9%,10%,11%,12%,13%,14%,15%,16%,17%,18%,19%,20%, de préférence 15% de la biomasse (1) de siccité inférieure ou égale à 1%,2%,3%,4%,5%,6%,7%,8%,9%,10%,11%,12%,13%,14%,15%,16%,17%,18%,19%,20 %, de préférence 15% par au-moins un module (3) de séparation et au-moins un tamis (4),
e) produire des matières sèches solides (31) à la sortie du module (3),
f) coupler ledit tamis (4) et ledit module (3) de séparation de la biomasse au moyen d'un premier conduit (32) de transfert, transportant un reliquat de ladite partie solide (S) de la biomasse (1) retenue sur le tamis (4), du tamis (4) vers ledit module (3) de séparation de la biomasse et
   d'un second conduit de transfert (30) transportant ladite partie liquide (L) de la biomasse (1) dudit module (3) de séparation de la biomasse vers ledit tamis (4), afin d'optimiser la production matières sèches solides (31),
g) transporter la partie liquide (L) de la biomasse (1) de siccité inférieure ou égale à 15% dudit tamis (4) vers un module (6) de nanofiltration,
h) filtrer par nanofiltration la partie liquide (L) de la biomasse (1) de siccité inférieure ou égale à 1%,2%,3%,4%,5%,6%,7%,8%,9%,10%,11%,12%,13%,14%,15%, 16%,17%,18%,19%,20%, de préférence 15% pour
   - d'une part la faire passer dans un module d'extraction (5) d'engrais phosphorés et azotés afin de produire de manière indépendante des engrais phosphorés et azotés solides (51B) via un conduit (61B) de récupération et des engrais phosphorés et azotés solides et liquides (51A) via un conduit de transit (61C),
   - d'autre part la faire passer dans un module d'osmose inverse (7) pour produire de manière indépendante un engrais azoté riche en potassium (71) et de l'eau potable (72).

De préférence, le PH acide de la biomasse (1) est compris entre 5 et 6,5.
De préférence, ledit procédé comprend en outre une étape de retour de la partie solide (S) de la biomasse (1) retenue sur ledit module (4) vers ledit module (3).
De préférence, ledit procédé comprend en outre une étape de retour de la partie liquide (L) de la biomasse (1) dudit module (3) vers ledit module (4).
De préférence, ledit procédé comprend en outre une étape de diafiltration entre ledit module (4) et ledit module (6).
De préférence, ledit procédé comprend en outre une étape de retour d'une partie de produits liquides phosphorés et azotés du module (6) vers le conduit (21A) directement relié audit module (2) d'analyses de PH et de siccité.
De préférence, ledit procédé comprend en outre une étape de retour d'une partie de l'engrais azoté (71) riche en potassium du module (7) vers le conduit (21A) directement relié audit module (2) d'analyses de PH et de siccité.

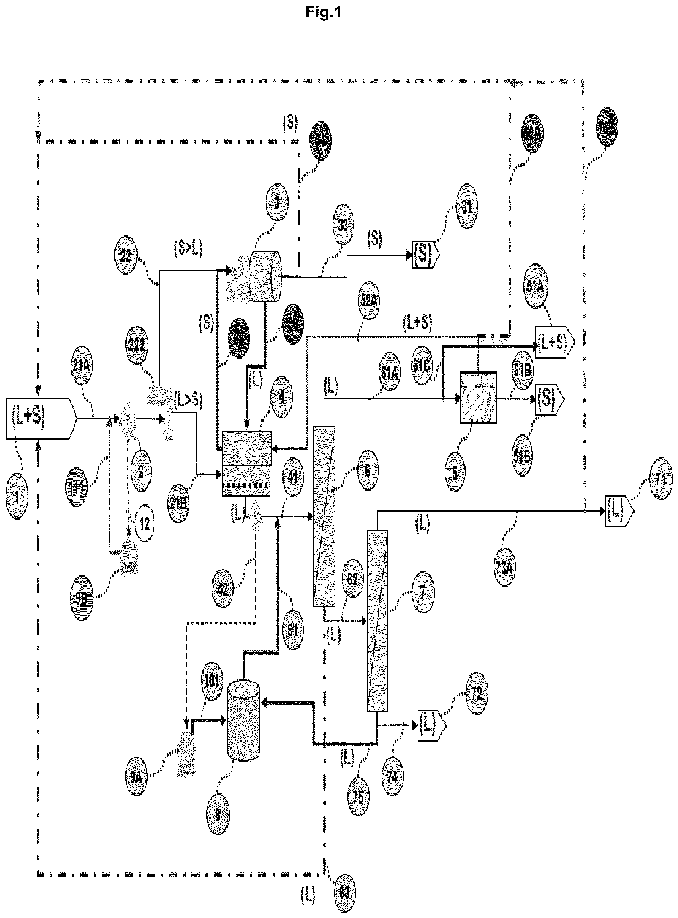

La figure 1 montre le dispositif de la présente invention dans lequel la signification des signes de références est la suivante:

### CANALISATIONS & TRANSFERTS :

21A: canalisation commune d'alimentation en matières brutes
21B: canalisation d'alimentation du tamis
22: canalisation d'alimentation du séparateur
32: premier conduit de couplage du tamis vers le séparateur (solides)
33 : convoyeur de sortie de matières sèches solides
30: second conduit de couplage du séparateur vers le tamis (liquide)
34: conduit de réinjection en tête de matières solides sèches
41: canalisation de transfert du filtrat du tamis vers les membranes
52A: canalisation de sortie de l'engrais riche en phosphore, en suspension liquide
52B: canalisation de retour en tête de procédé pour des liquides et grains d'ensemencement
61A: canalisation de transfert de produits liquides phosphorés et azotés des membranes vers l'extracteur (5) de struvite
61B: conduit de récupération des grains de struvite (solides)
61C: conduit de transit de l'engrais riche en phosphore, en suspension liquide
62: canalisation de transfert du filtrat nanofiltré vers le module d'osmose inverse (7)
63: canalisation de récupération de solutions basiques filtrées
73A: canalisation de sortie de l'engrais riche en potassium, en solution liquide
73B: canalisation de retour en tête de procédé
74: canalisation de sortie d'eau osmosée (eau potable)
75: canalisation de réutilisation d'eau pour la diafiltration
8: réserve de solution de diafiltration
91: canalisation de diafiltration basique
101: canalisation de dosage de réactif basique

### FLUX DE MATIERES :

1: biomasse (par ex. : déjections animales, boues de stations d'épuration)
31: matière solide sèche extraite
51A: produits phosphorés et azotés sous forme solide+liquide (càd struvite en suspension)
51B: produits phosphorés et azotés sous forme solide (càd struvite sèche solide)
71: engrais riche en potassium extrait (liquide)
72: eau potable purifiée extraite

### EQUIPEMENTS & INSTRUMENTS :

2: module d'analyses de PH et de siccité (en ligne en temps réel)
222: répartiteur selon la siccité
3: module de séparation de phase solide/liquide
4: tamis
42: chaine de mesure du pH en ligne
5: module d'extraction d'engrais phosphorés et azotés (struvite)
6: module de nanofiltration - ultrafiltration fine
7: module d'osmose inverse
9A & 9B: pompes de régulation de PH (réactif basique)
L : liquide ; S : solide ; L+S : solide en suspension liquide

### Mode de réalisation préférentiel:

Un mode de mise en oeuvre est destiné au fractionnement des déjections animales contenant une partie liquide telles que les lisiers de bovins, de porcins, d'ovins ou de tous autres animaux d'élevages. Lesdits lisiers sont pompés directement dans leur cuve ou bassin de stockage et acheminés au répartiteur (222) par la canalisation (21A) commune d'alimentation en matières brutes. Le module (2) d'analyses de PH et de siccité évalue la siccité du lisier pompé : lorsque ladite siccité est inférieure ou égale à 1%,2%,3%,4%,5%,6%,7%,8%,9%,10%,11%,12%,13%,14%,15%,16%,17%,18%,19%,20%, de préférence 15%, ledit répartiteur (222) transfère lesdits lisiers pompés vers le tamis (4) par la canalisation (21B) d'alimentation du tamis, et lorsque ladite siccité est supérieure à 1%,2%,3%,4%,5%,6%,7%,8%,9%,10%,11%,12%,13%,14%,15%,16%,17%,18%,19%,20%, de préférence 15%, ledit répartiteur (222) transfère lesdits lisiers pompés vers le séparateur (3) par la canalisation (22) d'alimentation du séparateur.
L'avantage créé par le répartiteur (222) est d'étendre l'acception de lisiers en entrée à toute la gamme de siccité, ce qui n'est possible avec aucun type d'équipement actuel.

Le fractionnement débute par l'action couplée dudit module (3) de séparation de phase solide/liquide et du tamis (4). Le couplage est réalisé en récupérant la fraction solide rejetée par le tamis (4) dans le premier conduit (32) de couplage du tamis vers le séparateur pour l'introduire dans le flux principal entrant dans le module (3) de séparation de phase solide/liquide par la canalisation (22) d'alimentation du séparateur d'une part, et en récupérant la fraction liquide rejetée par le module (3) de séparation de phase solide/liquide dans le second conduit (30) de couplage du séparateur vers le tamis (4) pour l'introduire dans le tamis (4) d'autre part.
L'avantage créé par le couplage est de supprimer le rejet de deux fractions difficilement valorisables, le refus solide du tamis (4) et l'effluent liquide émis par le module (3) de séparation de phase solide/liquide, de façon à placer le présent procédé de fractionnement au service de l'économie circulaire par une valorisation de tous les extraits.

Le module (3) de séparation de phase solide/liquide produit des matières sèches solides (31) évacuées par le convoyeur (33) de sortie de matières sèches solides. Une partie desdites matières solides (31) sèches extraites peut être retournée par le conduit (34) de réinjection en tête de matières solides sèches en amont du répartiteur (222), dans le but d'obtenir une modification des caractéristiques rhéologiques des lisiers entrants (1) telle qu'un épaississement ou une adsorption de colloïdes afin de faciliter la répartition.

Le tamis (4) produit un filtrat liquide transféré par la canalisation (41) de transfert du filtrat du tamis vers le module (6) de nanofiltration. Il peut subir pendant ce transfert une modification de sa concentration par diafiltration au moyen de la réserve (8) de solution de diafiltration et de la canalisation (91) de diafiltration basique versant de l'eau dans ladite canalisation (41) et/ou une modification de pH au moyen de la pompe (9A) de régulation de pH ajoutant des réactifs dans ladite réserve d'eau de diafiltration par la canalisation (101) de dosage de réactif basique. L'avantage desdites modifications du filtrat du tamis est d'augmenter fortement sa filtrabilité sur le module (6) de nanofiltration afin d'optimiser le facteur de concentration volumique et de maximiser la séparation du phosphore et du potassium dans le but de faciliter les formulations de fertilisants à partir des fractions de produits (51A) phosphorés et azotés sous forme solide+liquide (càd struvite en suspension), de produits (51B) phosphorés et azotés sous forme solide (càd struvite sèche solide) et de l'engrais (71) riche en potassium extrait (liquide).

Le module (6) de nanofiltration produit un filtrat liquide transféré par la canalisation (62) de transfert du filtrat nanofiltré vers le module (7) de finition par exemple par osmose inverse d'une part, et un concentrat liquide riche en azote et en phophore ledit concentrat étant acheminé initialement par la canalisation (61A) vers le module (5) module d'extraction d'engrais phosphorés et azotés d'autre part. Une partie dudit concentrat peut être évacuée directement sous sa forme liquide (51A) (en fait de petits cristaux en suspension dans un liquide) par la canalisation (61C) qui assure le contournement dudit module (5).

Une partie dudit filtrat liquide issu dudit module (6) de nanofiltration peut être retournée par la canalisation (63) de récupération de solutions basiques filtrées en amont du répartiteur (222), dans le but d'obtenir une modification des caractéristiques rhéologiques des biomasses (1) (lisiers entrants) telle qu'une dilution ou un mouillage afin de faciliter la répartition.

Ledit module (5) de formation d'engrais solides riches en phosphore (51b) émet un sous-produit liquide contenant des amorces de cristaux phosphorés qui sert à ensemencer le tamis (4) par la canalisation (52A) de sortie de l'engrais riche en phosphore ou la biomasse entrante (1) par la canalisation (52B) de retour en tête de procédé pour des liquides et grains d'ensemencement. L'avantage de ces ensemencements en amont est de maximiser la récupération du phosphore contenu dans ladite biomasse (1).

Le module (7) d'osmose inverse produit une eau (72) de qualité égale ou supérieure à celle requise par les normes européennes de potabilisation, ladite eau étant soit évacuée par la canalisation (74) de sortie d'eau, soit réutilisée pour la réserve de solution de diafiltration (8) par apport au travers de la canalisation (75). L'avantage créé par l'association des modules de nanofiltration (6) et d'osmose inverse (7) est de réduire fortement l'énergie requise pour obtenir ladite qualité d'eau tout en disposant d'une double barrière.

Ledit module (7) produit un concentrat (71) riche en potassium et en azote, ledit concentrat est évacué par la canalisation (73A) ou est retourné en amont du répartiteur (222), dans le but d'obtenir une modification des caractéristiques rhéologiques de la biomasse(1) (lisiers) entrante telle qu'une dilution ou un mouillage afin de faciliter la répartition.

D'autres mises en oeuvre peuvent être réalisées par simple ajustement des réglages des modules (222), (3) et (4) afin de fractionner d'autres biomasses telles que, sans limitation, les digestats, les boues de méthaniseur, les boues de stations d'épuration, les moûts de fermentation, les jus de macération, les récoltes de microalgues.

Le tableau 1 ci-après synthétise les principaux avantages de la présente invention en comparaison avec des solutions de l'art antérieur:

**Tableau 1 :**

| | **Critères & normes** | **Présente invention** | **Pompage suivi de l'épandage** | **Capture de la phase solide (C)** | **Traitement sur la phase liquide (D)** | **Combinaison des actions de (C) et (D)** |
|---|---|---|---|---|---|---|
| **Taux de vidange (fosse à lisiers)** | **Vol/Vol** | 96-99% | 99% | 10-30% | 50-70% | 50-70% |
| **Qualité du liquide extrait (eau)** | **% de paramètres satisfaits, Dir.91/676/CEE** | 100% | 0% | 0% | 15-50% | 15-50% |
| **Pureté de l'engrais phosphaté produit** | **Poids/Poids** | > 95% | <10% | <10% | Pas d'engrais phosphaté | <10% |
| **Séparation sélective du potassium et du phosphore** | **Présence Poids/Poids** | Oui >30% | Non <5% | Non <2% | Non Pas d'engrais | Non <2% |
| **Plage de siccité admissible pour les matières entrantes** | **Poids Matière sèche /Poids total** | 1-35% | 1-15% | 1-35% | 1-15% | 1-35% |
| **Contamination des eaux souterraines par K ou PO₄ ou NO₃** | **Risque avéré Teneurs constatées** | Non | Oui Selon excès des apports | Oui Selon excès des apports | Oui Selon excès des apports | Oui Selon excès des apports |

La « Directive Nitrates » est une directive européenne datée du 12 décembre 1991, la Directive 91/676/CEE. Le contenu d'une directive européenne concernant les normes européennes pour une eau distribuée a été transposé en droit français par le décret no 2001-1220 du 20 décembre 2001. La directive européenne 98/83 du 3 novembre 1998 qui est entrée en vigueur le 23 décembre 2003 fixe à 250 mg/l la teneur maximum en ions chlorures dans l'eau potable. Un pourcentage de 100% de paramètres satisfaits, signifie que tous les critères potabilité de l'eau (selon la directive européenne de potabilité de l'eau) sont remplis.

Le tableau 1 nous apprend que la présente invention évite une contamination des eaux souterraines par le potassium ou le phosphate ou le nitrate alors que les autres techniques connues contaminent les eaux souterraines et la mer.
Par conséquent, le dispositif et le procédé de la présente invention représentent une réponse écologique adéquate au problème récurrent de pollution des nappes phréatiques et de la mer.

**Tableau 2 : tableau comparatif avec l'art antérieur**

| | **Présente invention** **Fig.1** | EP 1757562 (2007**)** | US 2014/0377829 |
|---|---|---|---|
| **Rendement de récupération des matières sèches solides** | 53 % ± 3% | 28 % ± 2% | 28 % ± 2% |
| **Rendement de solubilisation des matières fertilisantes :** | 72% ± 1% | 61% ± 1% | 61% ± 1% |
| **-engrais phosphoré et azoté** | | | |
| **-engrais azoté riche en potassium** | | | |

La même quantité de produit de départ (biomasse identique) a été introduite dans les trois dispositifs mentionnés dans le tableau 2 et les rendements ont été calculés à partir des produits d'arrivé.

Le tableau 2 nous apprend que la présente invention possède un bien meilleur rendement de récupération des matières sèches solides mais aussi un bien meilleur rendement de solubilisation des matières fertilisantes (engrais phosphoré et azoté ainsi que de l'engrais azoté riche en potassium) que les deux documents de l'art antérieur mentionnés dans le tableau 2 qui sont les plus proches de la présente invention.

Certaines caractéristiques de l'invention qui sont décrites sous forme de mode de réalisation séparés, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

## Revendications

1. **Dispositif** de traitement d'une biomasse (1) pour produire des matières sèches solides (31), un engrais phosphoré et azoté (51A;51B), un engrais azoté (71) riche en potassium et de l'eau (72) comprenant :
- de la biomasse (1) se présentant sous forme d'une partie dite liquide (L) et d'une partie dite solide (S), introduites par au-moins une canalisation (21A) commune d'alimentation en matières brutes directement relié à au-moins un module (2) d'analyses de PH et de siccité mesurant les caractéristiques de siccité et de PH de ladite biomasse (1), ledit module (2) d'analyses de PH et de siccité étant placé en amont d'un répartiteur (222),
- au-moins un répartiteur (222) directement relié d'une part à au-moins un module (3) de séparation des parties liquides (L) et solides (S) de la biomasse (1) et d'autre part à au-moins un tamis (4) par la canalisation (21B) d'alimentation du tamis, ledit répartiteur (222) recevant ladite biomasse (1) et envoyant cette biomasse (1) vers ledit module (3) de séparation des parties liquides (L) et solides (S) de la biomasse (1) si la siccité est supérieure à 15% et envoyant la biomasse (1) vers ledit un tamis (4) si la siccité est inférieure ou égale à 15%,
- ledit tamis (4) dans lequel entre ladite biomasse (1) de siccité inférieure ou égale à 15%, comportant :
• au-moins une canalisation (21B) d'alimentation du tamis permettant l'entrée de la biomasse (1) de siccité inférieure ou égale à 15%, ladite canalisation (21B) étant directement reliée audit répartiteur (222),
• au-moins un second conduit (30) de couplage du module (3) de séparation audit tamis (4) permettant l'entrée de la partie liquide (L) extraite de la biomasse (1) de siccité supérieure à 15%, étant directement reliée à au-moins un module (3) de séparation des parties liquides (L) et solides (S) de la biomasse (1),
• au-moins une canalisation (41) de transfert permettant la sortie de la partie liquide (L) de la biomasse (1) et étant directement reliée à au-moins un module (6) de nanofiltration,
- ledit au-moins un module (3) de séparation de la biomasse (1) de siccité supérieure à 15% comportant :
• au moins une canalisation (22) d'alimentation du séparateur permettant l'entrée de la biomasse (1) de siccité supérieure à 15%, la dite canalisation (22) étant directement reliée audit répartiteur (222),
• au-moins un convoyeur (33) de sortie de matières sèches solides (31),
- au-moins un premier conduit (32) de couplage reliant ledit tamis (4) audit module (3) de séparation de la biomasse, ledit premier conduit (32) transportant un reliquat de la partie solide (S) de la biomasse (1) retenue sur le tamis (4) vers ledit module (3) de séparation de la biomasse et,
- ledit second conduit (30) de couplage du module (3) de séparation de la biomasse audit tamis (4), ledit second conduit (30) transportant la partie liquide (L) de la biomasse (1) dudit module (3) de séparation de la biomasse vers ledit tamis (4),
- ledit premier conduit (32) de couplage et ledit second conduit (30) de couplage constituant une boucle de couplage entre ledit tamis (4) et ledit module (3) de séparation de la biomasse,
- ledit au-moins un module (6) de nanofiltration comportant :
• au-moins une canalisation (61A) de transfert de produits liquides phosphorés et azotés directement reliée à un module (5) d'extraction de produits phosphorés et azotés sous forme solide (51B), évacuant lesdits produits phosphorés et azotés sous forme solide (51B) par au-moins un conduit de récupération (61B),
• au-moins un conduit (61C) de transit de produits phosphorés et azotés sous forme liquide et solide (51A), ledit conduit (61C) de transit étant connecté à ladite canalisation (61A) en amont du module (5) d'extraction de produits phosphorés et azotés,
• au-moins un conduit (62) de transfert de produits liquides riches en potassium, en azote et en eau directement relié à au moins un module d'osmose inverse (7),
- ledit au-moins un module d'osmose inverse (7) comportant :
• au-moins une canalisation (73A) de sortie d'engrais azoté (71) riche en potassium,
• au-moins un conduit (74) de sortie d'eau (72).

2. Dispositif selon la revendication 1, dans lequel au-moins une première pompe (9B) de régulation du PH de la biomasse (1) est directement reliée par au-moins un conduit (111) à la canalisation commune d'alimentation en matières brutes (21A) relié à la biomasse (1).

3. Dispositif selon la revendication 1, comprenant au-moins un module (8) de réserve de diafiltration qui comporte :
• au-moins un conduit de sortie (91) directement relié audit conduit (41) relié au module (6) et
• au-moins un conduit d'entrée (75) directement relié audit module d'osmose inverse (7) et
• au-moins un conduit d'entrée (101) directement relié à au-moins une deuxième pompe (9A) de régulation du PH.

4. Dispositif selon la revendication 1, dans lequel ledit module (5) d'extraction de produits phosphorés et azotés sous forme solide (51B) comporte au-moins un conduit de transfert primaire (52B) relié directement à ladite canalisation commune d'alimentation en matières brutes (21A) recevant la biomasse (1), pour ensemencer ladite canalisation (21A) en amont dudit répartiteur (222) et comporte aussi au-moins un conduit de transfert secondaire (52A) relié directement au tamis (4), transportant lesdits produits phosphorés et azotés sous forme liquide et solide (51A) vers ledit tamis (4), pour ensemencer ledit tamis (4).

5. Dispositif selon la revendication 1, dans lequel ledit module d'osmose inverse (7) évacue un engrais azoté (71) riche en potassium par au-moins une canalisation (73A) de sortie d'engrais azoté (71) riche en potassium, lequel est connecté à au-moins une canalisation (73B) de retour en tête reliée directement à ladite canalisation commune d'alimentation en matières brutes (21A) recevant la biomasse (1), afin d'augmenter la concentration en engrais azoté (71) riche en potassium.

6. **Procédé** de traitement d'une biomasse (1) pour produire des matières sèches solides (31), un engrais phosphoré et azoté (51A;51B), un engrais azoté (71) riche en potassium et de l'eau (72) comprenant les étapes suivantes:
a) traiter une biomasse (1) ayant un PH acide, se présentant sous forme d'une partie liquide (L) et d'une partie solide (S), par au-moins une pompe (9B;9A) de régulation de PH,
b) analyser le PH et la siccité de la biomasse (1) par un module (2) d'analyses de PH et de siccité placé en amont d'un répartiteur (222),
c) répartir par au-moins un répartiteur (222) la biomasse (1) de siccité inférieure ou égale à 15% vers au-moins un tamis (4) et la biomasse (1) de siccité supérieure à 15% vers au-moins un module (3) de séparation de la biomasse (1),
d) séparer la biomasse (1) de siccité supérieure à 15% de la biomasse (1) de siccité inférieure ou égale à 15% par au-moins un module (3) de séparation et au-moins un tamis (4),
e) produire des matières sèches solides (31) à la sortie dudit module (3),
f) coupler ledit tamis (4) audit module (3) au moyen d'un premier conduit (32) de couplage, transportant un reliquat de ladite partie solide (S) de la biomasse (1) retenue sur le tamis (4), du tamis (4) vers ledit module (3) et
d'un second conduit de transfert (30) transportant ladite partie liquide (L) de la biomasse (1) dudit module (3) vers ledit tamis (4), afin d'optimiser la production de matières sèches solides (31),
g) transporter la partie liquide (L) de la biomasse (1) de siccité inférieure ou égale à 15% dudit tamis (4) vers un module (6) de nanofiltration,
h) filtrer par nanofiltration la partie liquide (L) de la biomasse (1) de siccité inférieure ou égale à 15% pour
• d'une part la faire passer dans un module d'extraction (5) d'engrais phosphorés et azotés afin de produire de manière indépendante des engrais phosphorés et azotés solides (51B) via un conduit (61B) de récupération et des engrais phosphorés et azotés solides et liquides (51A) via un conduit de transit (61C),
• d'autre part la faire passer dans un module d'osmose inverse (7) pour produire de manière indépendante un engrais azoté riche en potassium (71) et de l'eau (72).

7. Procédé selon la revendication 6, dans lequel le PH acide de la biomasse (1) est compris entre 5 et 6,5.

8. Procédé selon la revendication 6, comprenant en outre une étape de retour de la partie solide (S) de la biomasse (1) retenue sur ledit tamis (4) vers ledit module (3).

9. Procédé selon la revendication 6, comprenant en outre une étape de retour de la partie liquide (L) de la biomasse (1) dudit module (3) vers ledit tamis (4).

10. Procédé selon la revendication 6, comprenant en outre une étape de diafiltration entre ledit tamis (4) et ledit module (6).

11. Procédé selon la revendication 6, comprenant en outre une étape de retour d'une partie de produits liquides phosphorés et azotés du module (6) vers la canalisation (21A) commune d'alimentation en matières brutes directement reliée audit module (2) d'analyses de PH et de siccité.

12. Procédé selon la revendication 6, comprenant en outre une étape de retour d'une partie de l'engrais azoté (71) riche en potassium du module (7) vers ladite canalisation (21A) commune d'alimentation en matières brutes directement reliée audit module (2) d'analyses de PH et de siccité.

## Patentansprüche

1. **Vorrichtung** (1) zur Behandlung einer Biomasse zur Erzeugung von fester Trockensubstanz (31), eines Phosphor- und Stickstoffdüngemittels (51A; 51B), eines kaliumreichen Düngemittels (71) und von Wasser (72), umfassend:
- Biomasse (1), die in Form eines sogenannten flüssigen Teils (L) und eines sogenannten festen Teils (S) vorliegt, die durch mindestens eine gemeinsame Rohstoffzuleitung (21A) eingeleitet werden, die direkt mit mindestens einem Modul (2) für pH-Wert- und Trockenheitsanalysen verbunden ist, das die Trockenheits- und pH-Wert-Eigenschaften der Biomasse (1) misst, wobei das Modul (2) für pH-Wert- und Trockenheitsanalysen stromauf eines Verteilers (222) angeordnet ist,
- mindestens einen Verteiler (222), der einerseits direkt mit mindestens einem Modul (3) zur Trennung der flüssigen (L) und festen (S) Teile der Biomasse (1) und andererseits mit mindestens einem Sieb (4) über die Zuleitung (21B) des Siebes verbunden ist, wobei der Verteiler (222) die Biomasse (1) aufnimmt und diese Biomasse (1) zu dem Modul (3) zur Trennung der flüssigen (L) und festen (S) Teile der Biomasse (1) leitet, wenn die Trockenheit mehr als 15 % beträgt, und die Biomasse (1) zu dem einen Sieb (4) leitet, wenn die Trockenheit weniger als oder gleich 15 % beträgt,
- wobei das Sieb (4), in das die Biomasse (1) mit einer Trockenheit von weniger als oder gleich 15 % eintritt, Folgendes aufweist:
• mindestens eine Zuleitung (21B) des Siebes, die das Zuführen der Biomasse (1) mit einer Trockenheit von weniger als oder gleich 15 % ermöglicht, wobei die Leitung (21B) direkt mit dem Verteiler (222) verbunden ist,
• mindestens einen zweiten Kanal (30) zur Kopplung des Trennmoduls (3) mit dem Sieb (4), der das Zuführen des aus der Biomasse (1) mit einer Trockenheit von mehr als 15 % extrahierten flüssigen Teils (L) ermöglicht, wobei er direkt mit mindestens einem Modul (3) zur Trennung der flüssigen (L) und festen (S) Teile der Biomasse (1) verbunden ist,
• mindestens eine Transferleitung (41), die das Abführen des flüssigen Teils (L) der Biomasse (1) ermöglicht und direkt mit mindestens einem Nanofiltrationsmodul (6) verbunden ist,
- wobei das mindestens eine Modul (3) zur Trennung der Biomasse (1) mit einer Trockenheit von mehr als 15 % Folgendes aufweist:
• mindestens eine Zuleitung (22) des Trenners, die das Zuführen der Biomasse (1) mit einer Trockenheit von mehr als 15 % ermöglicht, wobei die Leitung (22) direkt mit dem Verteiler (222) verbunden ist,
• mindestens eine Fördereinrichtung (33) zum Abführen von fester Trockensubstanz (31),
- mindestens einen ersten Kopplungskanal (32), der das Sieb (4) mit dem Modul (3) zur Trennung der Biomasse verbindet, wobei der erste Kanal (32) eine Restmenge des festen Teils (S) der Biomasse (1), die auf dem Sieb (4) zurückgehalten wird, zu dem Modul (3) zur Trennung der Biomasse befördert, und
- den zweiten Kanal (30) zur Kopplung des Moduls (3) zur Trennung der Biomasse mit dem Sieb (4), wobei der zweite Kanal (30) den flüssigen Teil (L) der Biomasse (1) vom Modul (3) zur Trennung der Biomasse zum Sieb (4) befördert,
- wobei der erste Kopplungskanal (32) und der zweite Kopplungskanal (30) eine Kopplungsschleife zwischen dem Sieb (4) und dem Modul (3) zur Trennung der Biomasse bilden,
- wobei das mindestens eine Nanofiltrationsmodul (6) Folgendes aufweist:
• mindestens eine Transferleitung (61A) für phosphor- und stickstoffhaltige flüssige Produkte, die direkt mit einem Modul (5) zur Extraktion von phosphor- und stickstoffhaltigen Produkten in fester Form (51B) verbunden ist, die die phosphor- und stickstoffhaltigen Produkte in fester Form (51B) über mindestens einen Rückgewinnungskanal (61B) austrägt,
• mindestens einen Transitkanal (61C) für phosphor- und stickstoffhaltige Produkte in flüssiger und fester Form (51A), wobei der Transitkanal (61C) an die Leitung (61A) stromauf des Moduls (5) zur Extraktion von phosphor- und stickstoffhaltigen Produkten angeschlossen ist,
• mindestens einen Transferkanal (62) für kalium-, stickstoff- und wasserreiche flüssige Produkte, der direkt mit mindestens einem Umkehrosmosemodul (7) verbunden ist,
- wobei das mindestens eine Umkehrosmosemodul (7) Folgendes umfasst:
• mindestens eine Abführleitung (73A) für kaliumreiches Stickstoffdüngemittel (71),
• mindestens einen Abführkanal (74) für Wasser (72).

2. Vorrichtung nach Anspruch 1, wobei mindestens eine erste Pumpe (9B) zur Regelung des pH-Werts der Biomasse (1) über mindestens einen Kanal (111) direkt mit der gemeinsamen Rohstoffzuleitung (21A) verbunden ist, der mit der Biomasse (1) verbunden ist.

3. Vorrichtung nach Anspruch 1, umfassend mindestens ein Reserve-Diafiltrationsmodul (8), das Folgendes aufweist:
• mindestens einen Abführkanal (91), der direkt mit dem Kanal (41) verbunden ist, der mit dem Modul (6) verbunden ist, und
• mindestens einen Zuführkanal (75), der direkt mit dem Umkehrosmosemodul (7) verbunden ist, und
• mindestens einen Zuführkanal (101), der direkt mit mindestens einer zweiten Pumpe (9A) zur Regelung des pH-Werts verbunden ist.

4. Vorrichtung nach Anspruch 1, wobei das Modul (5) zur Extraktion von phosphor- und stickstoffhaltigen Produkten in fester Form (51B) mindestens einen primären Transferkanal (52B) aufweist, der direkt mit der gemeinsamen Rohstoffzuleitung (21A) verbunden ist, die die Biomasse (1) aufnimmt, um die Leitung (21A) stromauf des Verteilers (222) zu beimpfen, und auch mindestens einen sekundären Transferkanal (52A) aufweist, der direkt mit dem Sieb (4) verbunden ist, der die phosphor- und stickstoffhaltigen Produkte in flüssiger und fester Form (51A) zu dem Sieb (4) befördert, um das Sieb (4) zu beimpfen.

5. Vorrichtung nach Anspruch 1, wobei das Umkehrosmosemodul (7) ein kaliumreiches Stickstoffdüngemittel (71) über mindestens eine Abführleitung (73A) für kaliumreiches, Stickstoffdüngemittel (71) austrägt, die mit mindestens einer Rückleitung (73B) zum Anfang verbunden ist, die direkt mit der gemeinsamen Rohstoffzuleitung (21A) verbunden ist, die die Biomasse (1) aufnimmt, um die Konzentration an kaliumreichem Stickstoffdüngemittel (71) zu erhöhen.

6. **Verfahren** zur Behandlung einer Biomasse (1) zur Erzeugung von fester Trockensubstanz (31), eines Phosphor- und Stickstoffdüngemittels (51A; 51B), eines kaliumreichen Stickstoffdüngemittels (71) und von Wasser (72), umfassend die folgenden Schritte:
a) Behandeln einer Biomasse (1) mit einem sauren pH-Wert, die in Form eines flüssigen Teils (L) und eines festen Teils (S) vorliegt, mit mindestens einer Pumpe (9B; 9A) zur Regelung des pH-Werts,
b) Analysieren des pH-Werts und der Trockenheit der Biomasse (1) mit einem Modul (2) für pH-Wert- und Trockenheitsanalysen, das stromauf eines Verteilers (222) angeordnet ist,
c) Verteilen der Biomasse (1) mit einer Trockenheit von weniger als oder gleich 15 % zu mindestens einem Sieb (4) und der Biomasse (1) mit einer Trockenheit von mehr als 15 % zu mindestens einem Modul (3) zur Trennung der Biomasse (1) durch mindestens einen Verteiler (222),
d) Trennen der Biomasse (1) mit einer Trockenheit von mehr als 15 % von der Biomasse (1) mit einer Trockenheit von weniger als oder gleich 15 % durch mindestens ein Trennmodul (3) und mindestens ein Sieb (4),
e) Erzeugen von fester Trockensubstanz (31) am Auslass des Moduls (3),
f) Koppeln des Siebes (4) mit dem Modul (3) mittels eines ersten Kopplungskanals (32), der eine Restmenge des festen Teils (S) der Biomasse (1), die auf dem Sieb (4) zurückgehalten wird, vom Sieb (4) zum Modul (3) befördert, und
eines zweiten Transferkanals (30), der den flüssigen Teil (L) der Biomasse (1) vom Modul (3) zum Sieb (4) befördert, um die Erzeugung fester Trockensubstanz (31) zu optimieren,
g) Befördern des flüssigen Teils (L) der Biomasse (1) mit einer Trockenheit von weniger als oder gleich 15 % vom Sieb (4) zu einem Nanofiltrationsmodul (6),
h) Filtrieren des flüssigen Teils (L) der Biomasse (1) mit einer Trockenheit von weniger als oder gleich 15 % durch Nanofiltration, um
• ihn einerseits einem Extraktionsmodul (5) für Phosphor- und Stickstoffdüngemittel zuzuführen, um unabhängig feste Phosphor- und Stickstoffdüngemittel (51B) über einen Rückgewinnungskanal (61B) und feste und flüssige Phosphor- und Stickstoffdüngemittel (51A) über einen Transitkanal (61C) zu erzeugen,
• ihn andererseits einem Umkehrosmosemodul (7) zuzuführen, um unabhängig ein kaliumreiches Stickstoffdüngemittel (71) und Wasser (72) zu erzeugen.

7. Verfahren nach Anspruch 6, wobei der saure pH-Wert der Biomasse (1) zwischen 5 und 6,5 liegt.

8. Verfahren nach Anspruch 6, umfassend ferner einen Schritt des Zurückführens des festen Teils (S) der auf dem Sieb (4) zurückgehaltenen Biomasse (1) zum Modul (3).

9. Verfahren nach Anspruch 6, umfassend ferner einen Schritt des Zurückführens des flüssigen Teils (L) der Biomasse (1) vom Modul (3) zum Sieb (4).

10. Verfahren nach Anspruch 6, umfassend ferner einen Diafiltrationsschritt zwischen dem Sieb (4) und dem Modul (6).

11. Verfahren nach Anspruch 6, umfassend ferner einen Schritt des Zurückführens eines Teils der flüssigen phosphor- und stickstoffhaltigen Produkten vom Modul (6) zur gemeinsamen Rohstoffzuleitung (21A), die direkt mit dem Modul (2) für pH-Wert- und Trockenheitsanalysen verbunden ist.

12. Verfahren nach Anspruch 6, umfassend ferner einen Schritt des Zurückführens eines Teils des kaliumreichen Stickstoffdüngemittels (71) vom Modul (7) zur gemeinsamen Rohstoffzuleitung (21A), die direkt mit dem Modul (2) für pH-Wert- und Trockenheitsanalysen verbunden ist.

## Claims

1. **A** biomass treatment **device** (1) for producing solid dry matter (31), a phosphorus and nitrogen fertilizer (51A; 51B), a nitrogen fertilizer (71) rich in potassium and water (72) comprising:
- biomass (1) in the form of a so-called liquid part (L) and a so-called solid part (S), introduced by at least one common supply pipe (21A) for raw materials directly connected to at least one module (2) for pH and dryness analyses measuring the dryness and pH characteristics of said biomass (1), said module (2) for PH and dryness analyses being placed upstream of a splitter (222),
- at least one distributor (222) directly connected on the one hand to at least one module (3) for separating the liquid (L) and solid (S) portions of the biomass (1) and on the other hand to at least one sieve (4) through the sieve supply line (21B), said distributor (222) receiving said biomass (1) and sending said biomass (1) to said separation module (3) of liquid (L) and solid (S) parts of the biomass (1) if the dryness is greater than 15% and sending the biomass (1) to said sieve (4) if the dryness is less than or equal to 15%,
- said sieve (4) wherein between said biomass (1) of dryness less than or equal to 15%, comprising:
• at least one sieve supply line (21B) allowing the entry of the biomass (1) of dryness less than or equal to 15%, said duct (21B) being directly connected to said distributor (222),
• at least a second duct (30) for coupling the separation module (3) to said sieve (4) allowing the liquid portion (L) extracted from the biomass (1) of dryness greater than 15%, being directly connected to at least one module (3) for separating the liquid (L) and solid (S) parts of the biomass (1),
• at least one transfer line (41) allowing the exit of the liquid part (L) from the biomass (1) and being directly connected to at least one nanofiltration module (6),
- at least one module (3) for separating the biomass (1) from dryness greater than 15%, comprising:
• at least one line (22) for supplying the separator allowing entry of the biomass (1) of dryness greater than 15%, said line (22) being directly connected to said distributor (222),
• at least one conveyor outlet (33) for dry solids (31),
- at least a first coupling duct (32) connecting said sieve (4) to said biomass separation module (3), said first duct (32) conveying a remainder of the solid portion (S) of the biomass (1) retained on the sieve (4) to said biomass separation module (3) and,
- said second conduit (30) for coupling the biomass separation module (3) to said sieve (4), said second conduit (30) carrying the liquid part (L) of the biomass (1) from said separation module (3) biomass to said sieve (4),
- to said first coupling duct (32) and said second coupling duct (30) constituting a coupling loop between said sieve (4) and said biomass separation module (3),
- at least one nanofiltration module (6) comprising:
• at least one phosphorus and nitrogen liquid transfer line (61A) directly connected to a module (5) for extraction of phosphorus and nitrogen products in solid form (51B), discharging said phosphorus and nitrogen products in solid form (51B) by at least one recovery conduit (61B),
• at least one conduit (61C) for transit of phosphorus and nitrogen products in liquid and solid form (51A), said transit duct (61C) being connected to said duct (61A) upstream of the extraction module (5) phosphorus and nitrogen products,
• at least one conduit (62) for transferring liquid products rich in potassium, nitrogen and water directly connected to at least one reverse osmosis module (7),
- at least one named reverse osmosis module (7) comprising:
• at least one line (73A) for discharging nitrogen fertilizer (71) rich in potassium,
• at least one water outlet duct (74) (72).

2. Device according to claim 1, wherein at least a first pump (9B) for regulating the PH of the biomass (1) is directly connected by at least one conduit (111) to the common raw material feed pipe (21A) connected to the biomass (1).

3. Device according to claim 1, comprising at least one diafiltration reserve module (8) which comprises:
• at least one outlet duct (91) directly connected to said duct (41) connected to the module (6) and
• at least one inlet conduit (75) directly connected to said reverse osmosis module (7) and
• at least one inlet duct (101) directly connected to at least one second pump (9A) for regulating the PH.

4. Device according to claim 1, wherein said module (5) for extracting phosphorus and nitrogen products in solid form (51B) comprises at least one primary transfer line (52B) connected directly to said common supply pipe for raw materials (21A) receiving the biomass (1), for seeding said duct (21A) upstream of said distributor (222) and also comprises at least one secondary transfer duct (52A) connected directly to the sieve (4), carrying said phosphorus and nitrogen products in liquid and solid form (51A) to said sieve (4), to seed said sieve (4).

5. Device according to claim 1, wherein said reverse osmosis module (7) discharges a nitrogen fertilizer (71) rich in potassium by at least one nitrogen-rich nitrogen fertilizer outlet line (73A), which is connected to at least one overhead pipe (73B) directly connected to said common raw material supply pipe (21A) receiving the biomass (1), in order to increase the concentration of nitrogen fertilizer (71) rich in potassium.

6. **A method** of treating a biomass (1) to produce solid dry matter (31), a phosphorus and nitrogen fertilizer (51A; 51B), a nitrogen fertilizer (71) rich in potassium and water (72) comprising the following steps:
a) treating a biomass (1) having an acidic PH, in the form of a liquid part (L) and a solid part (S), by at least one PH regulating pump (9B; 9A),
b) to analyse the PH and the dryness of the biomass (1) by a module (2) for analyses of PH and dryness placed upstream of a distributor (222),
c) distributing by at least one distributor (222) the biomass (1) of dryness less than or equal to 15% to at least one sieve (4) and the biomass (1) of dryness greater than 15% to at least one biomass (1) separation module (3),
d) separating the biomass (1) of dryness greater than 15% from the biomass (1) of dryness less than or equal to 15% by at least one separation module (3) and at least one sieve (4),
e) producing solid solids (31) at the outlet of said module (3),
f) coupling said sieve (4) to said module (3) by means of a first coupling duct (32), carrying a residue of said solid part (S) of the biomass (1) retained on the sieve (4), from the sieve (4) to said module (3) and
a second transfer conduit (30) carrying the said liquid biomass (1) part (L)of said module (3) to said sieve (4), in order to optimize the production of dry solids (31),
g) transporting the liquid portion (L) of the biomass (1) of dryness less than or equal to 15% from said sieve (4) to a nanofiltration module (6),
h) filtering by nanofiltration the liquid part (L) of the biomass (1) of dryness less than or equal to 15% for
• on the one hand to pass it in an extraction module (5) of phosphorus and nitrogen fertilizers to independently produce solid phosphorus and nitrogen fertilizers (51B) via a recovery conduit (61B) and phosphorus fertilizers and solid and liquid nitrogen (51A) via a transit duct (61C),
• on the other hand to pass it into a reverse osmosis module (7) to independently produce a nitrogen fertilizer rich in potassium (71) and water (72).

7. The process of claim 6 wherein the acidic PH of the biomass (1) is from 5 to 6.5.

8. The method of claim 6, comprising a further step of returning the solid portion (S) of the biomass (1) retained on said sieve (4) to said module (3).

9. The method of claim 6, comprising a further step of returning the liquid portion (L) of the biomass (1) from said module (3) to said sieve (4).

10. The method of claim 6, comprising a further step of diafiltration between said sieve (4) and said module (6).

11. The method of claim 6, comprising a further step of returning a portion of phosphorus and nitrogen liquid products from the module (6) to the common raw material supply line (21A) directly connected to said module (2) for PH and dryness analyses.

12. The method of claim 6, comprising a further step of returning a portion of the nitrogenous fertilizer (71) rich in potassium from the module (7) to said common raw material supply line (21A) directly connected to said module (2) for PH and dryness analyses.
